# EUROPÄISCHE PATENTSCHRIFT

(11) **EP 3 483 008 B1**
(45) Veröffentlichungstag und Bekanntmachung des Hinweises auf die Patenterteilung: **15.04.2020**
(21) Anmeldenummer: 18200317.8
(22) Anmeldetag: 15.10.2018
(51) Int. Cl.: B60R 13/08, F01N 13/10, F01N 13/18, F01N 13/14, F02B 77/11

(54) **HITZESCHILDBEFESTIGUNG**
HEAT SHIELD FIXING
FIXATION D'ÉCRAN THERMIQUE

(30) Priorität: 09.11.2017 DE 102017126241
(43) Veröffentlichungstag der Anmeldung: 15.05.2019
(73) Patentinhaber: MAN Truck & Bus SE, 80995 München (DE)
(72) Erfinder: Herzig, Jürgen, 91452 Wilhermsdorf (DE); Simon, Wolfgang, 90455 Nürnberg (DE); Lienert, Alexander, 91207 Lauf (DE)
(74) Vertreter: v. Bezold & Partner Patentanwälte - PartG mbB

(56) Entgegenhaltungen:
- DE-A1-102016 106 153
- US-A1- 2015 375 692
- US-B2- 7 065 963

## Beschreibung

Die Erfindung betrifft eine Vorrichtung zur Abschirmung heißer Bereiche, insbesondere einer Brennkraftmaschine.

Zum Abschirmen heißer Bereiche können Hitzeschilde z. B. bei Brennkraftmaschinen von Kraftfahrzeugen, insbesondere im Bereich des Abgasstrangs, eingesetzt werden. Die Hitzeschilde dienen dem Schutz von temperaturempfindlichen Bauteilen und Aggregaten. Dabei können die Hitzeschilde auch den Schallschutz verbessern.

Üblicherweise sind Hitzeschilde dreidimensional geformte Strukturbauteile, die mindestens eine metallische Blechlage aufweisen. Die dreidimensionale Form der mindestens einen metallischen Blechlage ergibt sich dabei üblicherweise aus der Form der gegeneinander abzuschirmenden Bauteile und deren Abstand zueinander.

Die Anbindung des Hitzeschildes an das Bauteil erfolgt üblicherweise mittels einer punktweisen Verbindung. Hierzu kann die metallische Blechlage bzw. können sämtliche metallischen Blechlagen mindestens eine Durchgangsöffnung aufweisen, die ein Befestigungselement aufnimmt. Als Befestigungselemente dienen dabei beispielsweise Schrauben, Bolzen, Stifte mit Querbolzen oder Nieten.

An diesen Befestigungspunkten kann im Falle der Befestigung an einem heißen Bauteil auch Wärme in den Hitzeschild übertragen werden. Der Hitzeschild kann sich aufgrund der Wärmeeinwirkung ausdehnen und schließlich wieder zusammenziehen, wenn keine Wärme mehr auf den Hitzeschild übertragen wird. Hierbei kann es zu plastischen Verformungen und Beschädigungen des Hitzeschilds kommen.

Aus der DE 11 2014 003 457 T5 ist ein Hitzeschild bekannt. Der Hitzeschild weist eine Durchgangsöffnung für den Durchgang eines Befestigungselements und eine Hülse, welche durch die Durchgangsöffnung durchdringt, auf. Der Hitzeschild weist weiterhin ein Entkopplungselement aus flexiblem Material auf, das zwischen dem Umfangsrand der Durchgangsöffnung und der Hülse angeordnet ist.

Weitere Befestigungssysteme für z. B. Hitzeschilde oder Verkleidungsteile sind bspw. aus der US 7,065,963 B2, der DE 10 2016 106153 A1, der US 2015/375692 A1 und der JP 2012-36828 A bekannt. US 7,065,963 B2 offenbart eine Vorrichtung mit den Merkmalen des Oberbegriffs des Anspruchs 1.

Der Erfindung liegt die Aufgabe zu Grunde, eine Vorrichtung mit einem Hitzeschild zu schaffen, bei dem der Anbindungspunkt des Hitzeschilds an das Bauteil verbessert werden. Insbesondere soll die Anbindung einen einfachen Aufbau aufweisen und Beschädigungen des Hitzeschilds aufgrund einer Wärmeausdehnung des Hitzeschilds verhindern oder zumindest verringern.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung dient zur Abschirmung heißer Bereiche, insbesondere einer Brennkraftmaschine. Die Vorrichtung weist einen Hitzeschild mit einem Durchgangsloch auf. Die Vorrichtung weist ein Bauteil, insbesondere eine Wärmequelle, mit einem Befestigungsbereich, der eine Aufnahme und einen Absatz, der die Aufnahme zumindest teilweise umgibt, aufweist, auf. Der Absatz erstreckt sich durch das Durchgangsloch des Hitzeschilds. Die Vorrichtung weist ein Befestigungselement, insbesondere eine Schraube (oder ein Bolzen, ein Stift mit Querbolzen oder eine Niete), auf. Das Befestigungselement befestigt den Hitzeschild an dem Befestigungsbereich. Das Befestigungselement stützt sich am Absatz ab, erstreckt sich durch das Durchgangsloch des Hitzeschilds hindurch und ist in der Aufnahme befestigt.

Die Vorrichtung ermöglicht eine gleitende bzw. gleitfähige Befestigung des Hitzeschilds am Bauteil mit einem einfachen Aufbau. Der Absatz ermöglicht, dass der Hitzeschild nicht zwischen dem Befestigungsbereich und dem Befestigungselement eingeklemmt wird, ohne dass hierzu zusätzliche Bauteile benötigt werden. Der Hitzeschild kann somit beim Ausdehnen oder Zusammenziehen relativ zu dem Bauteil und dem Befestigungselement auf dem Befestigungsbereich gleiten. Somit können unterschiedliche Wärmeausdehnungen zwischen dem Bauteil und dem Hitzeschild ausgeglichen werden. Dadurch kann eine plastische Verformung und eine Beschädigung des Hitzeschilds verhindert werden.

Mittels des Absatzes kann eine gleitfähige Befestigung mit geringem Aufwand ermöglicht werden. Durch einen Verzicht auf zusätzliche Bauteile zum Vorsehen einer gleitfähigen Befestigung können Kosten und ein Montageaufwand reduziert werden.

In einem besonders bevorzugten Ausführungsbeispiel ist der Hitzeschild mittels des Befestigungselements und des Absatzes in einer Wärmeausdehnungsrichtung des Hitzeschilds, insbesondere in einer Richtung senkrecht zu einer Längsachse des Befestigungselements, gleitfähig an dem Befestigungsbereich befestigt.

Insbesondere kann der Hitzeschild bei Wärmeausdehnung unter einem Schraubenkopf des als Schraube ausgebildeten Befestigungselements gleiten oder gleitfähig sein.

In einer Weiterbildung wird eine plastische Verformung des Hitzeschilds bei Ausdehnen und Zusammenziehen des Hitzeschilds unter Wärmeeinwirkung auf den Hitzeschild zumindest verringert oder ist zumindest verringerbar.

In einem Ausführungsbeispiel steht der Absatz über eine dem Bauteil abgewandte Außenfläche des Hitzeschilds über. Dadurch wird ermöglicht, dass ein Spalt zwischen dem Hitzeschild und dem Befestigungselement bzw. einem Zwischenelement, das zwischen dem Befestigungselement und dem Hitzeschild angeordnet ist, verbleibt. Aufgrund dieses Spalts kann der Hitzeschild sich gleitend zu dem Befestigungsabschnitt bewegen, wenn sich der Hitzeschild aufgrund von Wärmeeinwirkung ausdehnt oder zusammenzieht.

In einem weiteren Ausführungsbeispiel ist eine Höhe des Absatzes größer als eine Länge des ersten Durchgangslochs und/oder eine Materialstärke des Hitzeschilds ist kleiner als eine Höhe des Absatzes.

In einer Ausführungsform ist der Absatz ringförmig und/oder bundförmig ausgebildet und/oder der Absatz ist beabstandet zu einer Innenumfangsfläche des Durchgangslochs. Alternativ oder zusätzlich stützt sich das Befestigungselement an einer ringförmigen Stirnfläche des Absatzes ab, die eine Eintrittsöffnung der Aufnahme umgibt.

In einer weiteren Ausführungsform erstreckt sich der Absatz ausgehend von einer, insbesondere ringförmigen, Anlagefläche des ersten Befestigungsbereichs. Der Hitzeschild liegt an der Anlagefläche des ersten Befestigungsbereichs an.

In einer Ausführungsvariante stützt sich das Befestigungselement direkt auf dem Absatz ab, wobei ein Spalt zwischen einer dem Bauteil abgewandten Außenfläche des Hitzeschilds und dem Befestigungselement gebildet ist. Der Spalt ermöglicht die gleitfähige Befestigung des Hitzeschilds am Befestigungsbereich.

In einer weiteren Ausführungsvariante stützt sich das Befestigungselement indirekt über ein Zwischenelement, insbesondere eine Unterlegscheibe, an dem Absatz ab, wobei ein Spalt zwischen einer dem Bauteil abgewandten Außenfläche des Hitzeschilds und dem Zwischenelement gebildet ist.

In einer Weiterbildung ist der Spalt kleiner als 1 mm, insbesondere zwischen 0,1 mm und 0,8 mm, vorzugsweise zwischen 0,2 mm und 0,5 mm. Ein Spalt mit einer derartigen Größe kann bereits ausreichen, um eine gleitfähige Befestigung vorzusehen, sodass es zu keiner plastischen Verformung des Hitzeschilds kommt.

In einem Ausführungsbeispiel ist der Hitzeschild einlagig oder mehrlagig. Bei einlagigen Hitzeschilden kann ein Bereich des Hitzeschilds, der die Durchgangsöffnung umgibt, beispielsweise durch Prägen angewinkelt (angestellt) sein, um ein Klappern bei Vibrationen zu verhindern. Bei mehrlagigen Hitzeschilden können mehrere Lagen, insbesondere Metalllage, über mehrere Druckfügepunkte miteinander verbunden sein. Die Metalllagen können unterschiedlich dick sein, damit die einzelnen Lagen unterschiedliche Eigenfrequenzen aufweisen.

In einem weiteren Ausführungsbeispiel ist der Hitzeschild plattenförmig ausgebildet und/oder an eine Außenkontur des Bauteils angepasst. Insbesondere kann der Hitzeschild das Bauteil zumindest teilweise umgeben.

In einer Ausführungsform ist der Absatz in den ersten Befestigungsbereich gefräst. Damit kann der Absatz fertigungstechnisch einfach hergestellt werden.

Alternativ oder zusätzlich kann der erste Befestigungsbereich als Schraubdom ausgebildet sein, die Aufnahme kann ein Schraubenloch, z.B. ein Sackloch mit Innengewinde, sein und/oder der Absatz und der Befestigungsbereich können integral aus einem Stück hergestellt sein.

In einer weiteren Ausführungsform ist das Bauteil ein Abgasführungselement, insbesondere ein Abgasrohr, ein Abgaskrümmer, ein Abgasturbolader oder eine Abgasnachbehandlungsanlage, einer Brennkraftmaschine.

In einer Ausführungsvariante ist der Hitzeschild an mindestens einer Stelle, die beabstandet zu dem Durchgangsloch ist, starr (insbesondere nicht-gleitfähig) an dem Bauteil befestigt. Insbesondere kann die Stelle mit starrer Befestigung an einer dem Durchgangsloch gegenüberliegenden Seite des Hitzeschilds angeordnet sein. Somit kann sich der Hitzeschild ausgehend von dieser starren Befestigung bei Wärmeeinwirkung in einer Richtung zu der gleitfähigen Befestigung ausdehnen. Die starre Befestigung kann wie die hierin offenbarte starre Verschraubung ausgebildet sein.

Alternativ oder zusätzlich ist der Hitzeschild an mindestens einer Stelle, die beabstandet zu dem ersten Durchgangsloch ist, gleitfähig an dem Bauteil befestigt. Insbesondere ist der Hitzeschild an solchen Stellen gleitfähig mit dem Bauteil verbunden, die bei starrer Befestigung zu einer plastischen Verformung / Beschädigung des Hitzeschilds führen würden. Die gleitfähige Befestigung kann wie der hierin offenbarte Befestigungsbereich mit Absatz ausgebildet sein.

Die Erfindung betrifft auch ein Kraftfahrzeug, insbesondere Nutzfahrzeug, mit einer Vorrichtung wie hierin offenbart.

Es ist auch möglich, die Vorrichtung wie hierin offenbart bei anderen Einrichtungen zum Abschirmen heißer Bereiche einzusetzen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Hitzeschilds;
- Figur 2: eine Schnittansicht durch den Hitzeschild von Figur 1;
- Figur 3: eine Detailschnittansicht einer ersten Verschraubung des Hitzeschilds; und
- Figur 4: eine Detailansicht einer zweiten Verschraubung des Hitzeschilds.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

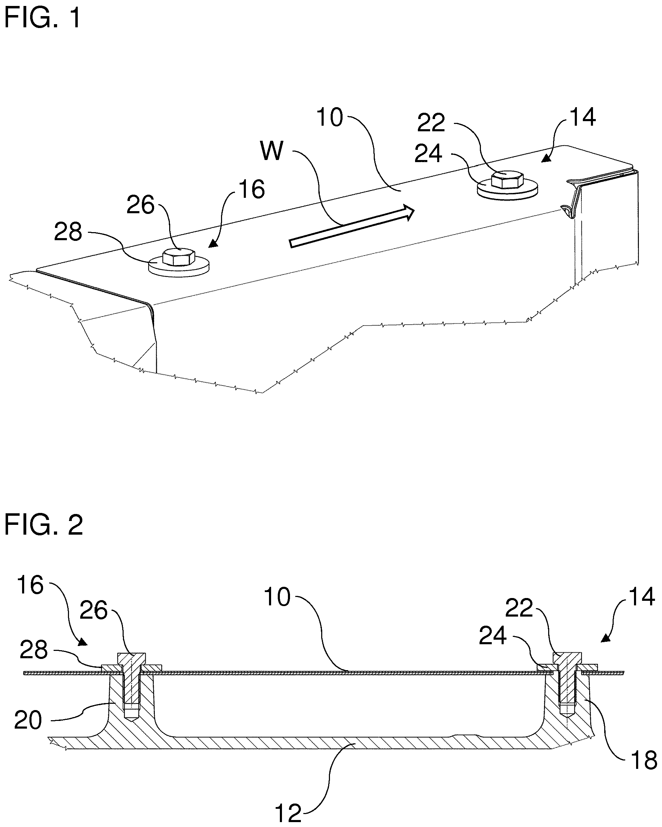

Die Figuren 1 und 2 zeigen einen Hitzeschild 10. Der Hitzeschild 10 ist an einem Bauteil 12 (siehe Figur 2) angebracht. Das Bauteil 12 ist eine Wärmequelle, die von dem Hitzeschild 10 abgeschirmt werden soll. Das Bauteil 12 kann beispielsweise ein Abgasführungselement, z. B. ein Abgasrohr, ein Abgaskrümmer, ein Turbolader oder eine Abgasnachbehandlungsanlage, einer Brennkraftmaschine sein. Die Brennkraftmaschine kann in einem Kraftfahrzeug, insbesondere einem Nutzfahrzeug, z. B. einem Lastkraftwagen oder einem Omnibus, umfasst sein.

Der Hitzeschild 10 kann einlagig oder mehrlagig ausgebildet sein. Vorzugsweise ist der Hitzeschild 10 aus einem Metall hergestellt.

Insbesondere ist der Hitzeschild 10 über eine erste Verschraubung 14 und eine zweite Verschraubung 16 an einem Gehäuse des Bauteils 12 angebracht. Es ist beispielsweise auch möglich, dass der Hitzeschild 10 über weitere Verschraubungen und/oder andere Befestigungen an dem Bauteil 12 angebracht ist.

Unter der Wärmeeinwirkung des Bauteils 12 kann sich der Hitzeschild 10 im Betrieb ausdehnen. Gibt das Bauteil 12 schließlich keine Wärme mehr an den Hitzeschild 10 ab, z. B. weil die Brennkraftmaschine abgeschaltet ist, zieht sich der Hitzeschild 10 wieder zusammen. Herkömmlich kann es hierbei aufgrund einer starren Befestigung des Hitzeschilds am Bauteil zu plastischen Verformungen des Hitzeschilds kommen. Hierbei kann der Hitzeschild beschädigt werden.

Um die plastische Verformung zu verhindern, ist der Hitzeschild 10 über die erste Verschraubung 14 gleitfähig an einem Befestigungsbereich 18 des Bauteils 12 befestigt. Über die zweite Verschraubung 16 ist der Hitzeschild 10 starr an einem zweiten Befestigungsbereich 20 des Bauteils 12 befestigt.

Es ist auch möglich, dass der Hitzeschild 10 über mehr als eine Verschraubung gleitfähig an dem Bauteil 12 befestigt ist und/oder das alle Verschraubungen zwischen dem Hitzeschild 10 und dem Bauteil 12 den Hitzeschild 10 gleitfähig an dem Bauteil 12 befestigen.

Die erste Verschraubung 14 weist ein Befestigungselement 22 und ein Zwischenelement 24 auf. Die zweite Verschraubung 16 weist ein Befestigungselement 26 und ein Zwischenelement 28 auf. Die Befestigungselemente 22, 26 sind beispielhaft als Schrauben ausgebildet. Die Befestigungselemente 22, 26 können bspw. auch als Bolzen, Stifte mit Querbolzen oder Nieten ausgebildet sein. Die Zwischenelemente 24, 28 sind beispielhaft als Unterlegscheiben ausgebildet. Es ist bspw. auch möglich, dass keine Zwischenelemente vorgesehen sind.

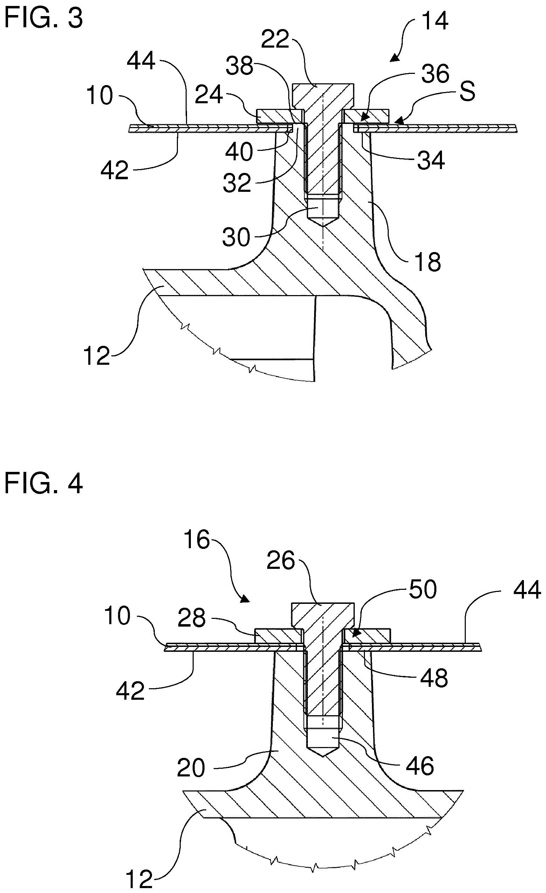

Nachfolgend ist die erste Verschraubung 14 unter Bezugnahme auf Figur 3 näher beschrieben.

Der erste Befestigungsbereich 18 weist eine Aufnahme 30 und einen Absatz (einen Bund) 32 auf. Der erste Befestigungsbereich 18 ist als Schraubdom ausgebildet. Die Aufnahme 30 ist beispielhaft als ein Schraubenloch, insbesondere Sackloch, mit Innengewinde ausgebildet.

Der Absatz 32 erstreckt sich von einer ringförmigen Anlagefläche 30 des ersten Befestigungsbereichs 18 durch ein erstes Durchgangsloch 36 des Hitzeschilds 10. Der Absatz 32 erstreckt sich durch das erste Durchgangsloch 36 hindurch und steht über eine dem Bauteil 12 abgewandte Außenfläche 44 des Hitzeschilds 10 über. Der Absatz 32 ist höher als eine Materialstärke (Dicke) des Hitzeschilds 10.

Der Absatz 32 ist ringförmig ausgebildet und umgibt die Aufnahme 30. Insbesondere weist der Absatz 32 eine ringförmige Stirnfläche 38 auf, die eine Eintrittsöffnung der Aufnahme 30 umgibt. Der Absatz 32 weist eine Mantelfläche 40 auf, die beabstandet zu einer Innenumfangsfläche des ersten Durchgangslochs 36 ist. Die Mantelfläche 40 wird einerseits von der Anlagefläche 34 und andererseits von der Stirnfläche 38 begrenzt. Ein Außendurchmesser des Absatzes 32 ist kleiner ist als ein Innendurchmesser des ersten Durchgangslochs 36. Der Absatz 32 ist somit über einen Ringspalt beabstandet zu der Innenumfangsfläche des ersten Durchgangslochs 36.

Der Hitzeschild 10 liegt auf der Anlagefläche 34 des ersten Befestigungsbereichs 18 auf. Insbesondere liegt der Hitzeschild 10 mit einer ersten Außenfläche 42, die dem Bauteil 12 zugewandt ist, auf der Anlagefläche 34 auf.

Das Zwischenelement 24 liegt auf der Stirnfläche 38 des Absatzes 32 auf. Das Zwischenelement 24 liegt nicht auf der zweiten Außenfläche 44 des Hitzeschilds 10 auf. Im Einzelnen besteht ein (kleiner) Spalt S zwischen der zweiten Außenfläche 44 und dem Zwischenelement 24.

Das Befestigungselement 22 erstreckt sich durch das Zwischenelement 24 und das erste Durchgangsloch 36. Das Befestigungselement 22 ist in die Aufnahme 30 eingeschraubt. Das Befestigungselement 22 stützt sich über das Zwischenelement 24 an der Stirnfläche 38 des Absatzes 32 ab. Das Befestigungselement 22 klemmt das Zwischenelement 24 zwischen sich und dem Absatz 32 ein. Insbesondere ist das Zwischenelement 24 zwischen einem Schraubenkopf des Befestigungselements 22 und der Stirnfläche 38 des Absatzes 32 eingeklemmt.

Aufgrund des Spalts S ist der Hitzeschild 10 bezüglich des ersten Befestigungsbereichs 18 und des Befestigungselements 22 gleitfähig. Mit anderen Worten gesagt, der Hitzeschild 10 ist nicht starr an dem ersten Befestigungsbereich 18 befestigt. Dadurch kann sich der Hitzeschild 10 bezüglich des ersten Befestigungsbereichs 18 bei Wärmeausdehnung innerhalb der Grenzen des Ringspalts, der zwischen dem Absatz 32 und der Innenumfangsfläche des ersten Durchgangslochs 36 besteht, bewegen.

Insbesondere ist der Hitzeschild 10 in einer Haupt-Wärmeausdehnungsrichtung des Hitzeschilds 10, d. h. in einer Richtung senkrecht zu einer Längsachse des Befestigungselements 26, gleitfähig an dem ersten Befestigungsbereich 18 befestigt. Somit kann der Hitzeschild 10 beim Ausdehnen oder Zusammenziehen unter dem Zwischenelement 28 gleiten.

Um eine gleitfähig Befestigung des Hitzeschilds 10 zu gewährleisten, kann der Spalt S beispielsweise größer als 0,1 mm und kleiner als 0,8 mm sein. Je nach möglicher Fertigungs- und Montagetoleranz kann der Spalt S beispielsweise auch im Hundertstelmillimeterbereich dimensioniert sein.

Es ist bspw. auch möglich, dass kein Zwischenelement vorgesehen ist und sich ein Befestigungselement direkt auf dem Absatz 32 abstützt. Bei einem derartigen Befestigungselement wäre ein Durchmesser des Schraubenkopfes größer als ein Durchmesser der ersten Durchgangsöffnung 36 des Hitzeschilds 10. Mit anderen Worten gesagt, das Befestigungselement und das Zwischenelement können auch als eine integrierte Einheit aus einem Stück hergestellt sein.

Die Figur 4 zeigt die starre Verschraubung 16 in größerem Detail.

Der zweite Befestigungsbereich 20 weist eine Aufnahme 46 und eine ringförmige Anlagefläche 48 auf. Die Aufnahme 46 ist als ein Schraubenloch, z. B. Sackloch, mit einem Innengewinde ausgebildet. Die ringförmige Anlagefläche 48 umgibt eine Eintrittsöffnung der Aufnahme 46.

Die dem Bauteil 12 zugewandte Außenfläche 42 des Hitzeschilds 10 liegt auf der Anlagefläche 48 auf. Das Zwischenelement 28 liegt auf der dem Bauteil 12 abgewandten Außenfläche 44 des Hitzeschilds 10 auf. Das Befestigungselement 26, insbesondere ein Schraubenkopf des Befestigungselements 26, stützt sich über das Zwischenelement 28 an der Außenfläche 44 ab. Das Befestigungselement 26 der zweiten Verschraubung 16 erstreckt sich durch das Zwischenelement 28 und ein zweites Durchgangsloch 50 des Hitzeschilds 10 und ist in die Aufnahme 46 eingeschraubt. Der Hitzeschild 10 ist zwischen dem Zwischenelement 28 und der Anlagefläche 48 starr eingeklemmt.

Unter Bezugnahme auf die Figuren 1 und 2 kann sich der Hitzeschild 10 unter Wärmeeinwirkung aufgrund der gleitfähigen Verschraubung 14 und der starren Verschraubung 16 in einer Richtung W (siehe Figur 1) ausdehnen. Dabei kann der Hitzeschild 10 entlang der Verschraubung 14 gleiten. Eine plastische Verformung / Beschädigung des Hitzeschilds 10 wird verhindert. Beim anschließenden Zusammenziehen des Hitzeschilds 10 entgegengesetzt zu der Richtung W bei Verringerung oder Wegnahme der Wärmeeinwirkung kann der Hitzeschild 10 erneut entlang der Verschraubung 14 gleiten. Auch hierbei kann eine plastische Verformung / Beschädigung des Hitzeschilds 10 verhindert werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Hitzeschilds, des Bauteils und des Befestigungselements des unabhängigen Anspruchs 1 offenbart.

### Bezugszeichenliste

- 10: Hitzeschild
- 12: Bauteil
- 14: Erste Verschraubung
- 16: Zweite Verschraubung
- 18: Erster Befestigungsbereich
- 20: Zweiter Befestigungsbereich
- 22: Befestigungselement
- 24: Zwischenelement
- 26: Befestigungselement
- 28: Zwischenelement
- 30: Aufnahme
- 32: Absatz (Bund)
- 34: Anlagefläche
- 36: Erstes Durchgangsloch
- 38: Stirnfläche
- 40: Mantelfläche
- 42: Erste Außenfläche
- 44: Zweite Außenfläche
- 46: Aufnahme
- 48: Anlagefläche
- 50: Zweites Durchgangsloch

- S: Spalt
- W: Wärmeausdehnungsrichtung

## Patentansprüche

1. Vorrichtung zur Abschirmung heißer Bereiche, insbesondere einer Brennkraftmaschine, aufweisend:
einen Hitzeschild (10) mit einem Durchgangsloch (36);
ein Bauteil (12), insbesondere eine Wärmequelle, mit einem Befestigungsbereich (18), der eine Aufnahme (30) und einen Absatz (32), der die Aufnahme (30) zumindest teilweise umgibt, aufweist, wobei der Absatz (32) sich durch das Durchgangsloch (36) des Hitzeschilds (10) erstreckt; und
ein Befestigungselement (22), insbesondere eine Schraube, das den Hitzeschild (10) an dem Befestigungsbereich (18) befestigt, wobei sich das Befestigungselement (22) am Absatz (32) abstützt, sich durch das Durchgangsloch (36) des Hitzeschilds (10) hindurch erstreckt und in der Aufnahme (30) befestigt ist,
**dadurch gekennzeichnet, dass:**
der Absatz (32) sich ausgehend von einer, insbesondere ringförmigen, Anlagefläche (34) des ersten Befestigungsbereichs (18) erstreckt; und
der Hitzeschild (10) an der Anlagefläche (34) des ersten Befestigungsbereichs (18) anliegt.

2. Vorrichtung nach Anspruch 1, wobei:
der Hitzeschild (10) mittels des Befestigungselements (22) und des Absatzes (32) in einer Wärmeausdehnungsrichtung (W) des Hitzeschilds (10), insbesondere in einer Richtung senkrecht zu einer Längsachse des Befestigungselements (22), gleitfähig an dem Befestigungsbereich (18) befestigt ist.

3. Vorrichtung nach Anspruch 1 oder Anspruch 2, wobei:
eine plastische Verformung des Hitzeschilds (10) bei Ausdehnen und Zusammenziehen des Hitzeschilds (10) unter Wärmeeinwirkung auf den Hitzeschild (10) zumindest verringert wird oder zumindest verringerbar ist.

4. Vorrichtung nach einem der vorherigen Ansprüche, wobei:
der Absatz (32) über eine dem Bauteil (12) abgewandte Außenfläche (44) des Hitzeschilds (10) übersteht.

5. Vorrichtung nach einem der vorherigen Ansprüche, wobei:
eine Höhe des Absatzes (32) größer als eine Länge des ersten Durchgangslochs (36) ist; und/oder
eine Materialstärke des Hitzeschilds (10) kleiner als eine Höhe des Absatzes (32) ist.

6. Vorrichtung nach einem der vorherigen Ansprüche, wobei:
der Absatz (32) ringförmig und/oder bundförmig ausgebildet ist; und/oder
der Absatz (32) beabstandet zu einer Innenumfangsfläche des Durchgangslochs (36) ist; und/oder
sich das Befestigungselement (22) an einer ringförmigen Stirnfläche (38) des Absatzes (32) abstützt, die eine Eintrittsöffnung der Aufnahme (30) umgibt.

7. Vorrichtung nach einem der vorherigen Ansprüche, wobei:
sich das Befestigungselement (22) direkt auf dem Absatz (32) abstützt, wobei ein Spalt (S) zwischen einer dem Bauteil (12) abgewandten Außenfläche (44) des Hitzeschilds (10) und dem Befestigungselement (22) gebildet ist.

8. Vorrichtung nach einem der Ansprüche 1 bis 6, wobei:
sich das Befestigungselement (22) indirekt über ein Zwischenelement (24), insbesondere eine Unterlegscheibe, an dem Absatz (32) abstützt, wobei ein Spalt (S) zwischen einer dem Bauteil (12) abgewandten Außenfläche (44) des Hitzeschilds (10) und dem Zwischenelement (24) gebildet ist.

9. Vorrichtung nach einem der Ansprüche 7 oder 8, wobei:
der Spalt (S) kleiner als 1 mm, insbesondere zwischen 0,1 mm und 0,8 mm, vorzugsweise zwischen 0,2 mm und 0,5 mm, ist.

10. Vorrichtung nach einem der vorherigen Ansprüche, wobei:
der Hitzeschild (10) einlagig oder mehrlagig ist; und/oder
der Hitzeschild (10) plattenförmig ausgebildet und/oder an eine Außenkontur des Bauteils (12) angepasst ist.

11. Vorrichtung nach einem der vorherigen Ansprüche, wobei:
der Absatz (32) in den ersten Befestigungsbereich (18) gefräst ist; und/oder
der erste Befestigungsbereich (18) als Schraubdom ausgebildet ist; und/oder
die Aufnahme (30) ein Schraubenloch ist; und/oder
der Absatz (32) und der Befestigungsbereich (18) integral aus einem Stück hergestellt sind.

12. Vorrichtung nach einem der vorherigen Ansprüche, wobei:
das Bauteil (12) ein Abgasführungselement, insbesondere ein Abgasrohr, ein Abgaskrümmer, ein Abgasturbolader oder eine Abgasnachbehandlungsanlage, einer Brennkraftmaschine ist.

13. Vorrichtung nach einem der vorherigen Ansprüche, wobei:
der Hitzeschild (10) an mindestens einer Stelle, die beabstandet zu dem ersten Durchgangsloch (36) ist, starr an dem Bauteil (12) befestigt ist; und/oder
der Hitzeschild (10) an mindestens einer Stelle, die beabstandet zu dem ersten Durchgangsloch (36) ist, gleitfähig an dem Bauteil (12) befestigt ist.

14. Kraftfahrzeug, insbesondere Nutzfahrzeug, mit einer Vorrichtung nach einem der vorherigen Ansprüche.

## Claims

1. An apparatus for shielding hot regions, in particular of an internal combustion engine, having:
a heat shield (10) with a through hole (36);
a component (12), in particular a heat source, with a fastening region (18) which has a receptacle (30) and a shoulder (32) which surrounds the receptacle (30) at least partially, the shoulder (32) extending through the through hole (36) of the heat shield (10); and
a fastening element (22), in particular a screw, which fastens the heat shield (10) to the fastening region (18), the fastening element (22) being supported on the shoulder (32), extending through the through hole (36) of the heat shield (10), and being fastened in the receptacle (30),
**characterized in that:**
the shoulder (32) extends in a manner which emanates from an, in particular annular, bearing face (34) of the first fastening region (18), and
the heat shield (10) bearing against the bearing face (34) of the first fastening region (18).

2. The apparatus according to Claim 1,
the heat shield (10) being fastened to the fastening region (18) by means of the fastening element (22) and the shoulder (32) such that it can slide in a heat expansion direction (W) of the heat shield (10), in particular in a direction perpendicularly with respect to a longitudinal axis of the fastening element (22).

3. The apparatus according to Claim 1 or Claim 2,
a plastic deformation of the heat shield (10) at least being reduced or at least being capable of being reduced in the case of expansion and contraction of the heat shield (10) under the action of heat on the heat shield (10) .

4. The apparatus according to one of the preceding claims,
the shoulder (32) projecting beyond an outer face (44) of the heat shield (10), which outer face (44) faces away from the component (12).

5. The apparatus according to one of the preceding claims,
a height of the shoulder (32) being greater than a length of the first through hole (36), and/or
a material thickness of the heat shield (10) being smaller than a height of the shoulder (32).

6. The apparatus according to one of the preceding claims,
the shoulder (32) being of annular and/or collar-shaped configuration, and/or
the shoulder (32) being spaced apart from an inner circumferential face of the through hole (36), and/or the fastening element (22) being supported on an annular end face (38) of the shoulder (32), which annular end face (38) surrounds an inlet opening of the receptacle (30) .

7. The apparatus according to one of the preceding claims,
the fastening element (22) being supported directly on the shoulder (32), a gap (S) being formed between an outer face (44) of the heat shield (10), which outer face (44) faces away from the component (12), and the fastening element (22).

8. The apparatus according to one of Claims 1 to 6,
the fastening element (22) being supported on the shoulder (32) indirectly via an intermediate element (24), in particular a washer, a gap (S) being formed between an outer face (44) of the heat shield (10), which outer face (44) faces away from the component (12), and the intermediate element (24).

9. The apparatus according to either of Claims 7 and 8,
the gap (S) being smaller than 1 mm, in particular being between 0.1 mm and 0.8 mm, preferably being between 0.2 mm and 0.5 mm.

10. The apparatus according to one of the preceding claims,
the heat shield (10) being in one layer or in multiple layers, and/or
the heat shield (10) being of plate-shaped configuration and/or being adapted to an outer contour of the component (12) .

11. The apparatus according to one of the preceding claims,
the shoulder (32) being milled into the first fastening region (18), and/or
the first fastening region (18) being configured as a screw boss, and/or
the receptacle (30) being a screw hole, and/or
the shoulder (32) and the fastening region (18) being manufactured integrally from one piece.

12. The apparatus according to one of the preceding claims,
the component (12) being an exhaust gas routing element, in particular an exhaust gas pipe, an exhaust gas manifold, an exhaust gas turbocharger or an exhaust gas aftertreatment system, of an internal combustion engine.

13. The apparatus according to one of the preceding claims,
the heat shield (10) being fastened rigidly to the component (12) at at least one point which is spaced apart from the first through hole (36), and/or
the heat shield (10) being fastened to the component (12) such that it can slide at at least one point which is spaced apart from the first through hole (36).

14. A motor vehicle, in particular a commercial vehicle, having an apparatus according to one of the preceding claims.

## Revendications

1. Dispositif de blindage de zones chaudes, en particulier d'un moteur à combustion interne, présentant :
un écran thermique (10) avec un trou de passage (36) ;
un composant (12), en particulier une source de chaleur, avec une zone de fixation (18) qui présente un logement (30) et un épaulement (32) qui entoure au moins en partie le logement (30), l'épaulement (32) s'étendant à travers le trou de passage (36) de l'écran thermique (10) ; et
un élément de fixation (22), en particulier une vis qui fixe l'écran thermique (10) à la zone de fixation (18), l'élément de fixation (22) s'appuyant contre l'épaulement (32), s'étendant à travers le trou de passage (36) de l'écran thermique (10) et étant fixé dans le logement (30),
**caractérisé en ce que**
l'épaulement (32) s'étend à partir d'une surface d'appui (34), notamment annulaire, de la première zone de fixation (18) ; et
l'écran thermique (10) s'applique contre la surface d'appui (34) de la première zone de fixation (18).

2. Dispositif selon la revendication 1, dans lequel :
l'écran thermique (10) est fixé à la zone de fixation (18) au moyen de l'élément de fixation (22) et de l'épaulement (32) de manière à pouvoir coulisser dans une direction de dilatation thermique (W) de l'écran thermique (10), en particulier dans une direction perpendiculaire à un axe longitudinal de l'élément de fixation (22).

3. Dispositif selon la revendication 1 ou la revendication 2, dans lequel :
une déformation plastique de l'écran thermique (10) lors de la dilatation et de la contraction de l'écran thermique (10) sous l'effet de la chaleur appliquée à l'écran thermique (10) est ou peut être au moins réduite.

4. Dispositif selon l'une quelconque des revendications précédentes, dans lequel :
l'épaulement (32) dépasse au-delà d'une surface extérieure (44) de l'écran thermique (10) opposée au composant (12).

5. Dispositif selon l'une quelconque des revendications précédentes, dans lequel :
une hauteur de l'épaulement (32) est supérieure à une longueur du premier trou de passage (36) ; et/ou
une épaisseur de matériau de l'écran thermique (10) est inférieure à une hauteur de l'épaulement (32) .

6. Dispositif selon l'une quelconque des revendications précédentes, dans lequel :
l'épaulement (32) est réalisé sous forme annulaire et/ou sous forme de collet ; et/ou
l'épaulement (32) est espacé d'une surface périphérique intérieure du trou de passage (36) ; et/ou
l'élément de fixation (22) s'appuie contre une surface frontale annulaire (38) de l'épaulement (32) qui entoure une ouverture d'entrée du logement (30).

7. Dispositif selon l'une quelconque des revendications précédentes, dans lequel :
l'élément de fixation (22) s'appuie directement sur l'épaulement (32), une fente (S) étant formée entre une surface extérieure (44) de l'écran thermique (10) opposée au composant (12) et l'élément de fixation (22).

8. Dispositif selon l'une quelconque des revendications 1 à 6, dans lequel :
l'élément de fixation (22) s'appuie indirectement par le biais d'un élément intermédiaire (24), en particulier d'une rondelle, contre l'épaulement (32), une fente (S) étant formée entre une surface extérieure (44) de l'écran thermique (10) opposée au composant (12) et l'élément intermédiaire (24).

9. Dispositif selon l'une quelconque des revendications 7 et 8, dans lequel :
la fente (S) est inférieure à 1 mm, en particulier comprise entre 0,1 mm et 0,8 mm, de préférence comprise entre 0,2 mm et 0,5 mm.

10. Dispositif selon l'une quelconque des revendications précédentes, dans lequel :
l'écran thermique (10) présente une ou plusieurs couches ; et/ou
l'écran thermique (10) est réalisé en forme de plaque et/ou est adapté au contour extérieur du composant (12).

11. Dispositif selon l'une quelconque des revendications précédentes, dans lequel :
l'épaulement (32) dans la première zone de fixation (18) est fraisé ; et/ou
la première zone de fixation (18) est réalisée sous forme de dôme de vissage ; et/ou le logement (30) est un trou de vis ; et/ou l'épaulement (32) et la zone de fixation (18) sont fabriqués intégralement d'une seule pièce.

12. Dispositif selon l'une quelconque des revendications précédentes, dans lequel :
le composant (12) est un élément de guidage de gaz d'échappement, en particulier un tuyau d'échappement, un collecteur de gaz d'échappement, un turbocompresseur à gaz d'échappement ou une installation de post-traitement des gaz d'échappement, d'un moteur à combustion interne.

13. Dispositif selon l'une quelconque des revendications précédentes, dans lequel :
l'écran thermique (10) est fixé rigidement au composant (12) au niveau d'au moins un endroit qui est espacé du premier trou de passage (36) ; et/ou l'écran thermique (10) est fixé au composant (12) de manière à pouvoir coulisser au niveau d'au moins un endroit qui est espacé du premier trou de passage (36).

14. Véhicule automobile, en particulier véhicule utilitaire, comprenant un dispositif selon l'une quelconque des revendications précédentes.
